Europäisches Patentamt

European Patent Office

Office européen des brevets

(11) Veröffentlichungsnummer : **0 540 535 B1**

(12) **EUROPÄISCHE PATENTSCHRIFT**

(45) Veröffentlichungstag der Patentschrift :
31.08.94 Patentblatt 94/35

(51) Int. Cl.$^5$ : **G10L 5/06**

(21) Anmeldenummer : **91912042.8**

(22) Anmeldetag : **24.06.91**

(86) Internationale Anmeldenummer :
**PCT/EP91/01171**

(87) Internationale Veröffentlichungsnummer :
**WO 92/02013 06.02.92 Gazette 92/04**

(54) **VERFAHREN ZUR SPRECHERADAPTION EINES AUTOMATISCHEN SPRACHERKENNUNGSSYSTEMS.**

(30) Priorität : **23.07.90 EP 90114095**

(43) Veröffentlichungstag der Anmeldung :
**12.05.93 Patentblatt 93/19**

(45) Bekanntmachung des Hinweises auf die
Patenterteilung :
**31.08.94 Patentblatt 94/35**

(84) Benannte Vertragsstaaten :
**DE FR GB**

(56) Entgegenhaltungen :
ICASSP 89 (International Conference on Accoustic, Speech and Signal Processing, Glasgow, 23-26. May 1989), vol. 1, IEEE, (New York,
US), R. Rigoll: "Speaker adaptation for large
vocabulary speech recognition sysems using
SpeekerMarkov models", p. 5-8.
ICASSP 89 (1989 International Conference on
Acoustics, Speech and Signal Processing,
Glasgow, 22-26 May 1989), vol. 1, IEEE, (New
York, US), S.J. Cox et al.: "Unsupervised speaker adaptation by probabilistic spectrum fitting", p. 294-297.
ICASSP 89 (1989 International Conference on
Acoustics, Speech and Signal Processing,
Glasgow, 22-26 May 1989), vol. 1, IEEE, (New
York, US), M.-W. Weng: "Iterative normalization for speaker-adaptive training in continuous speech recognition", p- 612-615
IBM Technical Disclosure Bulletin, vol, 21, No.
8, Jnauary 1979, (New York, US), C.C. Tappert
et al.: "Fast training method for speech recognition systems" p. 3413-3414.

(56) Entgegenhaltungen :
ICASSP 84 (IEEE International Conference on
Acoustics, Speech and Signal Processing,
San Diego, 19-21 March 1984), Vol. 3, IEEE,(-
New York, US), M.G. Di Benedetto et al.: "How
to avoid vowel normalization in identification
of vowels in continuous speech", p. 42.4.1 -
42.4.4
IEEE Transactions on Acoustics, Speech and
Signal Processing, vol. ASSP-35, No. 6, June
1987 IEEE, (New York, US), R.M. Stern et al.:
"Dynamic speaker adaptation for feature-
based isolated word recognition", p. 751-762.

(73) Patentinhaber : SIEMENS
AKTIENGESELLSCHAFT
Wittelsbacherplatz 2
D-80333 München (DE)

(72) Erfinder : SCHMIDBAUER, Otto
Schwaigerweg 14
D-8300 Landshut/Piflas (DE)

EP 0 540 535 B1

**Beschreibung**

Verfahren zur Sprecheradaption eines automatischen Spracherkennungssystems

Die Vorgänge bei der Artikulation von Sprache sind vielen natürlichen Schwankungen unterworfen. Deshalb sind akustische Muster für die gleiche Sprachäußerung selbst eines Sprechers nicht identisch. Solche Streuungen führen neben anderen Faktoren (z.B. Sprechgeschwindigkeit, Betonung) häufig zu Fehlern bei der automatischen Erkennung von Sprachsignalen.

Bedingt durch die unterschiedliche Geometrie der Artikulationsorgane unterscheiden sich akustische Muster gleicher Äußerungen von verschiedenen Sprechern umso mehr. Dies kann bei der sprecherunabhängigen Erkennung von Sprachsignalen, bei der die zu klassifizierenden Muster mit Referenzmustern anderer Sprecher verglichen werden, zu vermehrten Klassifikationsfehlern führen. Voraussetzung für eine praktische Nutzung und die universelle Anwendbarkeit eines Spracherkennungssystems ist jedoch eine ausreichende Robustheit und Anpassungsfähigkeit an verschiedene Sprachcharakteristika, verbunden mit ausreichenden Erkennungsleistungen.

In der Literatur sind verschiedene Verfahren zur Sprecheradaption beschrieben worden, welche auf Transformationen von Merkmalen bzw. Merkmalsvektoren basieren, welche die Unterschiede in den akustischen Mustern verschiedener Sprecher beschreiben. Verwendet man beispielsweise Formanten als Merkmale zur Analyse von Sprachsignalen, dann erhält man bei der Äußerung gleicher Laute bzw. Lautklassen durch unterschiedliche Sprecher unterschiedliche Zahlenwerte für die Formanfrequenzen. Durch eine im allgemeinen nichtlineare Transformation der Frequenzachse bzw. Achsen lassen sich die Formantfrequenzen zweier Sprecher (näherungsweise) zur Deckung bringen. Die Transformation beschreibt demnach die Unterschiede in den akustischen Mustern (Frequenzspektren) beider Sprecher (näherungsweise).

Bei den lautabhängigen bzw. lautklassenabhängigen Adaptionsverfahren (z.B. B.Kämmerer, "Verminderung der Sprecherabhängigkeiten durch Sprecheradaption", Dissertation, Erlangen 1989), wird für jede Lautklasse eine andere Transformation eingesetzt. Die mit solchen Verfahren erzielbaren Adaptionsleistungen sind zwar gut, aber es werden wegen der hohen Zahl zu schätzender Adaptionsparameter sehr lange Adaptionszeiten benötigt. Noch nachteiliger ist es zu bewerten, daß die Lautklassenzugehörigkeit der akustischen Muster bekannt sein muß, weshalb diese Verfahren zu den überwachten Adaptionsverfahren gehören.

Bei einigen lautabhängigen Adaptionsverfahren wird deshalb versucht, die Zahl der zu schätzenden Adaptionsparameter durch Bildung von Lautgruppen zu reduzieren. Damit lassen sich zwar die Adaptionszeiten verringern, die Adaptionsleistung sinkt jedoch proportional mit der Verminderung der Zahl der Gruppen (J.Jaschul, "Adaption vorverarbeiteter Sprachsignal zum Erreichen der Sprecherunabhängigkeit automatischer Spracherkennungssysteme", Dissertation, München 1982).

Verfahren mit lautklassenunabhängiger Adaption verwenden eine Transformation für alle Lautklassen. Diese Verfahren können zwar unüberwacht, d.h. ohne Kenntnis der Lautklassenzugehörigkeit eines Musters, ablaufen, besitzen aber allgemein eine deutlich geringere Adaptionsleistung als die (stets überwacht ablaufenden) lautklassenabhängigen Verfahren (R.Schwarz, Y.L. Chow, F.Kubala, "Rapid Speaker Adaption Using a Probabilistic Spectral Mapping", Proc. IEEE ICASSP, Dalls 1987). Bei einem bekannten lautklassenunabhängigen Verfahren (M.Blomberg, "Nonlinear Frequency Warp for Speech Recognition", Proc. IEEE ICASSP, Tokio 1986) werden die unterschiedlichen Lagen der Formantfrequenzen in Spektren zu gleichen Lauten durch eine für alle Lautklassen gleiche, nichtlineare Transformation der Frequenzachsen ausgeglichen. Die unter den Spektren liegenden Frequenzachsen werden so transformiert, daß ein Abstandsmaß zwischen den Spektren minimal wird. Damit läßt sich die Erkennungsrate von synthetischen Vokalen auch entscheidend verbessern. Das Verfahren ist aber überwacht (obwohl lautklassen unabhängig), da korrespondierende, d.h. zu gleichen Lauten gehörende, Spektren paarweise zugeordnet werden müssen.

Der Erfindung liegt die Aufgabe zugrunde, die Nachteile der bekannten Verfahren zur Sprecheradaption zu überwinden, und ein unüberwachtes Verfahren zur Sprecheradaption anzugeben, mit welchem die hohe Anpassungsleistung überwachter, lautklassenabgängiger Verfahren bei gleichzeitiger Begrenzung der Adaptionszeit erreicht oder übertroffen wird. Diese Aufgabe wird durch ein Verfahren zur Sprecheradaption eines automatischen Spracherkennungssystems mit den in Anspruch 1 angegebenen Schritten gelöst. Vorteilhafte Weiterbildungen der Erfindung sind durch die in den Unteransprüchen angegebenen Merkmale gekennzeichnet.

Das erfindungsgemäße Verfahren arbeitet ebenfalls mit einer lautklassenunabhängigen, d.h. für alle Lautklassen gleichen, Transformation des Merkmalsraums in sich. Hierdurch bleibt die Zahl der zu schätzenden Adaptionsparameter gering, und das Verfahren benötigt keine langen Adaptionszeiten. Ferner ist das Verfahren unüberwacht, da die Kenntnis der Lautklassenzugehörigkeit akustischer Muster zur Auffindung der Transformation nicht erforderlich ist. Im Gegensatz zu dem Verfahren von Blomberg (M.Blomberg 1986), bei dem

2

eine lautklassenunabhängige Transformation des Merkmalsraums durch die Minimierung eines Abstandsmaßes auf dem Raum der (lautklassenabhängigen) Spektren gefunden wird, ergibt sich die ebenfalls lautklassenunabhängige Transformation bei dem erfindungsgemäßen Verfahren durch Minimierung eines Abstandsmaßes auf dem Raum der Wahrscheinlichkeiten bzw. Wahrscheinlichkeitsverteilungen von Merkmalen. Da bei dieser Minimierung nur die (lautklassenunabhängigen) Gesamtverteilungen der Merkmale verwendet werden, ist das Verfahren im Gegensatz zu dem Verfahren von M. Blomberg unüberwacht. Trotzdem ist das erfindungsgemäße Verfahren lautklassenspezifisch, da mit Hilfe der Transformation sprecheradaptierte lautklassenspezifische Merkmalsverteilungen aus zu bekannten Referenzmustern gehörigen, lautklassenspezifischen Merkmalsverteilungen erzeugt werden. Deshalb erreicht oder übertrifft das erfindungsgemäße Verfahren die Adaptionsleistung bekannter Verfahren bei gleichzeitiger Begrenzung der Adaptionszeit.

Aus den sprecheradaptierten lautklassenspezifischen Merkmalsverteilungen werden sprecherspezifische bedingte Wahrscheinlichkeiten für die Zugehörigkeit extrahierter Merkmale zu Lautklassen ermittelt. Zur Analyse des Sprachsignals, d.h. zur Klassifikation der extrahierten Merkmale nach Lautklassen, werden den extrahierten Merkmalen diejenigen Lautklassen zugeordnet, für welche die sprecherspezifische bedingte Wahrscheinlichkeit maximal ist.

Die Transformation zur Sprecheradaption wird besonders vorteilhaft durch Minimierung eines Abstandsmaßes mit Hilfe der dynamischen Programmierung (H.Ney, "Dynamic Programming Algorithm for optimal estimation of speech parameter contoures" IEEE Trans. SMC 13, No. 3, 1983) gefunden. Als Abstandsmaß wird aus Gründen der Einfachheit vorteilhaft das Quadrat der euklidischen Norm der Differenz zweier Merkmalsverteilungen gewählt. Andere Abstandsmaße können ebenfalls verwendet werden.

Anhand eines bevorzugten Ausführungsbeispiels wird die Erfindung im folgenden auch anhand von Figuren weiter erläutert.

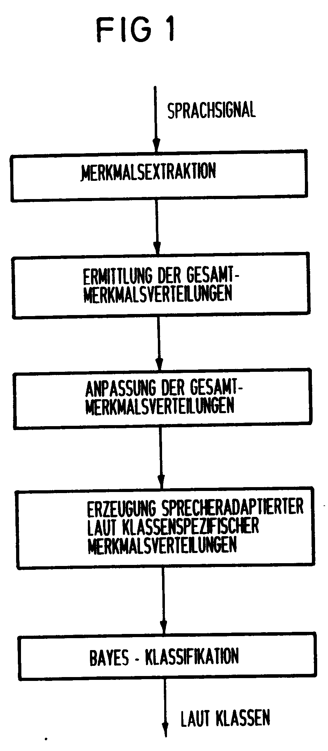

Figur 1 zeigt einen Ablaufplan des Verfahrens. Aus einem Sprachsignal werden Merkmale extrahiert und die Gesamtverteilungen dieser Merkmale werden ermittelt. Mit Hilfe einer Transformation, welche durch Anpassung der Gesamtmerkmalsverteilungen des Sprachsignals an die Gesamtmerkmalsverteilungen bekannter Referenzmuster gefunden wird, werden aus lautklassenspezifischen Merkmalsverteilungen dieser Referenzmuster sprecheradaptierte lautklassenspezifische Merkmalsverteilungen erzeugt. In einer anschließenden Bayes-Klassifikation werden die zu den extrahierten Merkmalen gehörigen Lautklassen ermittelt.

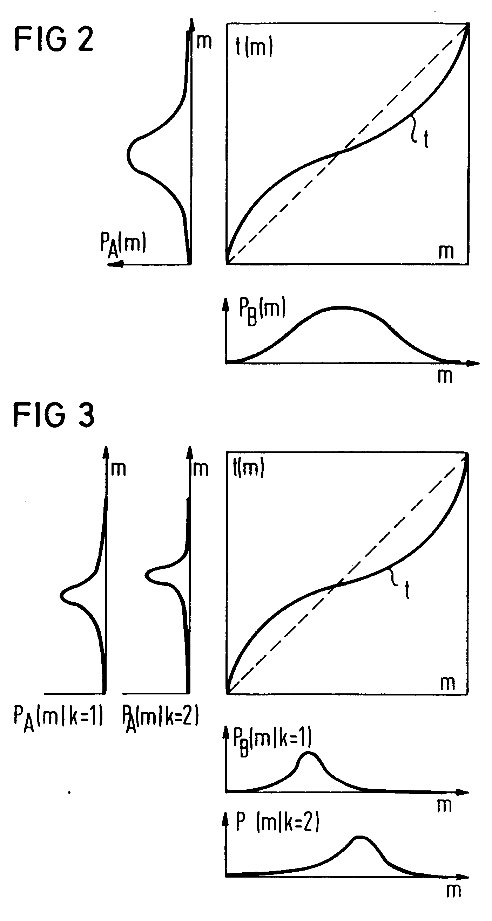

Figur 2 zeigt eine Veranschaulichung der Merkmalstransformation durch einen (nichtlinearen) Verzerrungspfad t, welcher jedem Merkmalsvektor m einen Merkmalsvektor t(m) zuordnet. Dieser Verzerrungspfad t transformiert die Gesamtmerkmalsverteilung $P_A(m)$ des Sprechers A in die Gesamtmerkmalsverteilung $P_B(m)$ des Sprechers B.

Figur 3 veranschaulicht die Anwendung der Merkmalstransformation zur Erzeugung sprecheradaptierter lautklassenspezifischer Merkmalsverteilungen aus zu Referenzmustern gehörenden lautklassenspezifischen Merkmalsverteilungen. Mit Hilfe des nicht linearen Verzerrungspfades t werden die lautklassenspezifischen Merkmalsverteilungen $P_A(m/k = 1)$ und $P_A(m/k = 2)$ des Sprechers A in die lautklassenspezifischen Merkmalsverteilungen $P_B(m/k = 1)$ und $P_B(m/k = 2)$ des Sprechers B transformiert.

Im ersten Schritt des Verfahrens werden aus einem Sprachsignal Merkmale extrahiert, die
- möglichst direkt mit artikulatorischen Bestimmungsmerkmalen, z.B. mit dem Mundöffnungsgrad, dem Friktionsgeräusch oder der Vokaltraktgeometrie korrelieren, und die
- in einer qualitativ sprecherinvarianten Beziehung zu artikulatorischen Kategorien stehen.

Merkmale mit diesen Eigenschaften werden akustisch artikulatorische Mekrmale genannt. Der Verlauf lautklassenspezifischer Wahrscheinlichkeitsverteilungen akustisch artikulatorischer Merkmale ist für alle Sprecher ähnlich, d.h. qualitativ sprecherinvariant.

Beispiele für akustisch artikulatorische Merkmale sind Formanten, also sprecherspezfische Resonanzstellen im Frequenzspektrum. Der untere Wertebereich des Vokalformanten "F2" korreliert z.B. sprecherinvariant immer mit ü-ähnlichen Lauten, mittlere Frequenzwerte treten hingegen für "F2" bei lauten wie O, A, 9 oder Ö auf. Der obere Wertebereich von "F2" korreliert schließlich mit Ä, E, Ü, I und ähnlichen Lauten. Andere akustische Merkmalssätze wie LPC, Cepstrum oder AKF haben diese Eigenschaften nicht. Sie sind deshalb zur Durchführung dieses Verfahrens wenig geeignet.

Zur Extraktion von Formanten aus dem Sprachsignal verwendet man vorteilhaft das LPC-Verfahren (O.Schmidbauer, "Ein System zur Lauterkennung in fließender Sprache auf der Basis artikulatorischer Merkmale", Dissertation, München 1989) bzw. (J.D.Markel, A.H.Gray, "Linear Prediction of Speech", Springer-Verlag, Berlin, Heidelberg, New York, 1976). Dieses Verfahren geht von einer Vorklassifikation des Sprachsignals in vokalische und konsonantische Sprachsegmente aus, um für die Bestimmung der Formantfrequenzen in diesen akustisch unterschiedlichen Segmenten verschiedene Klassifikationsalgorithmen verwenden zu können (0. Schmidbauer, "Segment-orientiertes Formant-Tracking mit dynamischer Programmierung", Tagungsband DAGA, Fortschritte der Akustik, 797-800, Darmstadt 1984).

Im zweiten Schritt des Verfahrens werden die Gesamtverteilungen der extrahierten Merkmale mit Hilfe ihrer relativen Häufigkeiten (Histogramme) bestimmt. Dazu werden aus den im Sprachsignal gemessenen, empirischen Häufigkeiten mittels Division durch die Stichprobengröße relative Häufigkeiten h(m) ermittelt, die mit den totalen Wahrscheinlichkeiten

$$(1) \qquad P_A(m) = \sum_K P_A(m|K) \cdot P(K)$$

für das Auftreten der Merkmalsvektoren bei dem Sprecher A, summiert über alle möglichen Lautklassen k, identifiziert werden. Gleichung (1) stellt den allgemeinen Zusammenhang zwischen der Gesamtverteilung $P_A(m)$ und lautklassenspezifischen Verteilungen $P_A(m/k)$ dar. Letztere brauchen für die Durchführung des Verfahrens weder bekannt zu sein noch aus dem Sprachsignal gemessen zu werden, weshalb das Verfahren zu den unüberwachten Adaptionsverfahren gehört.

Im dritten Schritt des Verfahrens wird eine Transformation des Merkmalsraums gefunden, welche die gemessenen Merkmalsverteilungen $P_A(m)$ im Sinne eines Abstandsmaßes auf dem Raum der Merkmalsverteilungen an zu Referenzmustern B gehörenden Gesamtmerkmalsverteilungen anpaßt. Dies geschieht z.B. durch Minimierung des Abstandsmaßes

$$(2) \qquad D = \| P_B - T[P_A] \|^2 = \sum_m \left( P_B(m) - P_A(t(m)) \right)^2$$

oder eines anderen geeigneten Abstandsmaßes auf den Raum der Merkmalsverteilungen. In Gleichung (2) bezeichnet T eine Transformation auf den Raum der Verteilungen, die mit der Transformation t auf den Raum der Merkmale (Merkmalsvektoren) über die Beziehung

$$(3) \qquad T[P](m) = P(t(m))$$

zusammenhängt. Die Transformation t der Merkmale induziert also eine Transformation der Verteilungen. Wählt man t in geeigneter Weise, dann werden $P_B$ und $T(P_A)$ in ihrem Verlauf einander ähnlich im Sinne des Abstandsmaßes D. Die eigentliche Minimierung wird vorteilhaft durch dynamische Programmierung (H.Ney, 1983) durchgeführt.

Im vierten Schritt des Verfahrens wird die so gefundene Transformation T bzw. t zur Erzeugung sprecheradaptierter lautklassenspezifischer Merkmalsverteilungen $P_A(m/k)$ aus den lautklassenspezifischen Merkmalsverteilungen $P_B(m/k)$ bekannter Referenzmuster B verwendet. Die sprecheradaptierten Verteilungen $P_A(m/k)$ ergeben sich dabei durch umgekehrte (inverse) Anwendung der Merkmalstransformation T bzw. t nach der Formel

$$(4) \qquad P_A(m/k) = T^{-1}[P_B](m/k) = P_B(t^{-1}(m)/k)$$

aus den Verteilungen der Referenzmuster.

Damit ist der statistische Zusammenhang zwischen den extrahierten Merkmalen m und den möglichen Lautklassen k auch für den Sprecher A bekannt, obwohl dieser Zusammenhang nicht gemessen wurde (keine Überwachung).

Dieser Zusammenhang, der sich durch die bedingten Wahrscheinlichkeiten $P_A(m/k)$ ausdrücken läßt, kann nun auf verschiedene Weisen zur Analyse des Sprachsignals, d.h. zur Klassifikation der Merkmale m nach Lautklassen k verwendet werden.

Sind die a-priori-Wahrscheinlichkeiten P(k) für das Vorliegen der Lautklassen k nicht bekannt, dann bietet sich die Maximierung der sprecheradaptierten lautklassenspezifischen Wahrscheinlichkeiten $P_A(m/k)$

$$(5) \qquad m \to k \text{ falls } P_A(m/k) > P_A(m/k')$$

für alle $k' \neq k$

(Maximum Likelihood) zur Klassifzierung an.

Sind jedoch die a-priori-Wahrscheinlichkeiten P(K) der Lautklassen bekannt (abhängig von Sprache, Dialekt, Akzent, etc.), dann minimiert man die Wahrscheinlichkeit eines Klassifikationsfehlers durch Maximierung der bedingten Wahrscheinlichkeiten $P_A(k/m)$ für die Zugehörigekeit der Merkmale m zu den Lautklassen k (Maximum a-posteriori-Probability). Dies entspricht dem Klassifikationsschema

$$(6) \qquad m \to k \text{ falls } P_A(k/m) > P_A(k'/m)$$

für alle $k' \neq k$

Die bedingten. (a-posterori) Wahrscheinlichkeiten $P_A(k/m)$ ergeben sich dabei zu

4

$$(7) \qquad P_A(k/m) = P_A(m/k) \frac{P(k)}{P_A(m)}$$

wobei $P_A(m)$ ein von k unabhängiger, für die Maximierung von $P_A(k/m)$ irrelevanter., konstanter Faktor ist und die bedingten Wahrscheinlichkeiten $P_A(m/k)$ nach Gleichung (4) ermittelt werden.

**Patentansprüche**

1. Verfahren zur Sprecheradaption eines automatischen Spracherkennungssystems, bei dem aus einem Sprachsignal charakteristische Merkmale extrahiert werden,
   **dadurch gekennzeichnet,**
   daß
   a) aus diesem Sprachsignal Gesamtmerkmalsverteilungen der extrahierten Merkmale ermittelt werden;
   b) eine Transformation der Merkmale durch Anpassung der Gesamtmerkmalsverteilungen des Sprachsignals an Gesamtmerkmalsverteilungen bekannter Referenzmuster ermittelt wird;
   c) mit Hilfe dieser Transformation aus lautklassenspezifischen Merkmalsverteilungen der Referensmuster sprecheradaptierte lautklassenspezifische Merkmalsverteilungen erzeugt werden.

2. Verfahren nach Anspruch 1,
   **dadurch gekennzeichnet,**
   daß aus den sprecheradaptierten lautklassenspezifischen Merkmalsverteilungen sprecherspezifische bedingte Wahrscheinlichkeiten für die Zugehörigkeit extrahierter Merkmale zu Lautklassen ermittelt werden.

3. Verfahren nach Anspruch 2,
   **dadurch gekennzeichnet,**
   daß das Sprachsignal analysiert wird, indem den extrahierten Merkmalen diejenige Lautklasse zugeordnet wird, für welche die sprecherspezifische bedingte Wahrscheinlichkeit maximal ist.

4. Verfahren nach einem der vorhergehenden Ansprüche,
   dadurch **gekennzeichnet,**
   daß die Transformation der Merkmale durch Minimierung eines Abstandsmaßes gefunden wird.

5. Verfahren nach Anspruch 4,
   dadurch **gekennzeichnet,**
   daß das Abstandsmaß durch dynamische Programmierung minimiert wird.

6. Verfahren nach einem der Ansprüche 4 oder 5,
   dadurch **gekennzeichnet,**
   daß das Quadrat der euklidischen Norm der Differenz zweier Merkmalsverteilungen als Abstandsmaß gewählt wird.

7. Verfahren nach einem der vorhergehenden Ansprüche,
   dadurch **gekennzeichnet,**
   daß Wahrscheinlichkeiten und Verteilungen durch empirische Häufigkeiten repräsentiert werden.

8. Verfahren nach einem der vorhergehenden Ansprüche,
   dadurch **gekennzeichnet,** daß akustisch artikulatorische Merkmale extrahiert werden.

9. Verfahren nach einem der vorhergehenden Ansprüche,
   dadurch **gekennzeichnet,**
   daß spektrale Merkmale extrahiert werden.

10. Verfahren nach einem der vorhergehenden Ansprüche,
    dadurch **gekennzeichnet,**
    daß Formantfrequenzen als Merkmale extrahiert werden.

## Claims

1. Method for speaker adaptation in an automatic speech-recognition system, in which characteristic features are extracted from a speech signal, characterized in that

   a) overall feature distributions of the extracted features are determined from this speech signal;

   b) a transformation of the features is determined by adapting the overall feature distributions of the speech signal to overall feature distributions of known reference patterns;

   c) this transformation is used to generate speaker-adapted, phonetic-class-specific feature distributions from phonetic-class-specific feature distributions of the reference patterns.

2. Method according to Claim 1, characterized in that speaker-specific, conditioned probabilities for the membership of extracted features with regard to phonetic classes are determined from the speaker-adapted, phonetic-class-specific feature distributions.

3. Method according to Claim 2, characterized in that the speech signal is analysed by assigning to the extracted features the phonetic class for which the speaker-specific, conditioned probability is a maximum.

4. Method according to one of the preceding claims, characterized in that the transformation of the features is found by minimizing a measure of distance.

5. Method according to Claim 4, characterized in that the measure of distance is minimized by dynamic programming.

6. Method according to one of Claims 4 or 5, characterized in that the square of the euclidian norm of the difference of two feature distributions is selected as the measure of distance.

7. Method according to one of the preceding claims, characterized in that probabilities and distributions are represented by empirical frequencies.

8. Method according to one of the preceding claims, characterized in that acoustically articulatory features are extracted.

9. Method according to one of the preceding claims, characterized in that spectral features are extracted.

10. Method according to one of the preceding claims, characterized in that formant frequencies are extracted as features.


## Revendications

1. Procédé d'adaptation au locuteur d'un système automatique de reconnaissance de la parole, selon lequel des caractéristiques sont extraites d'un signal vocal,
   caractérisé par le fait que

   a) les distributions de caractéristiques globales des caractéristiques extraites sont déterminées à partir de ce signal vocal;

   b) une transformation des caractéristiques est déterminée par adaptation des distributions de caractéristiques globales du signal vocal à des distributions de caractéristiques globales de modèles de référence connus;

   c) à l'aide de cette transformation, des distributions de caractéristiques spécifiques à des classes d'intensité sonore, adaptées aux locuteurs, sont produites à partir de distributions de caractéristiques, spécifiques aux classes d'intensité, des modèles de référence.

2. Procédé suivant la revendication 1, caractérisé par le fait que les probabilités conditionnelles spécifiques aux locuteurs sont déterminées, pour l'association de caractéristiques extraites à des classes d'intensité sonore, à partir de distributions de caractéristiques adaptées aux locuteurs et spécifiques de classes d'intensité sonore.

3. Procédé suivant la revendication 2, caractérisé par le fait qu'on analyse le signal vocal en associant aux caractéristiques extraites la classe d'intensité sonore, pour laquelle la probabilité conditionnelle spécifique au locuteur est maximale.

4. Procédé suivant l'une des revendications précédentes, caractérisé par le fait qu'on trouve la transformation des caractéristiques en réduisant au minimum la valeur de distance.

5. Procédé suivant la revendication 4, caractérisé par le fait qu'on réduit au minimum la valeur de distance au moyen d'une programmation dynamique.

6. Procédé suivant l'une des revendications 4 ou 5, caractérisé par le fait qu'on choisit, en tant que valeur de distance, le carré de la norme euclidienne de la différence de deux distributions de caractéristiques.

7. Procédé suivant l'une des revendications précédentes, caractérisé par le fait que les probabilités et les distributions sont représentées par des fréquences empiriques.

8. Procédé suivant l'une des revendications précédentes, caractérisé par le fait qu'on extrait les caractéristiques articulatoires du point de vue acoustique.

9. Procédé suivant l'une des revendications précédentes, caractérisé par le fait qu'on extrait des caractéristiques spectrales.

10. Procédé suivant l'une des revendications précédentes, caractérisé par le fait qu'on extrait des fréquences de formants, en tant que caractéristiques.

# FIG 1

SPRACHSIGNAL

↓

| MERKMALSEXTRAKTION |
|---|

↓

| ERMITTLUNG DER GESAMT-MERKMALSVERTEILUNGEN |
|---|

↓

| ANPASSUNG DER GESAMT-MERKMALSVERTEILUNGEN |
|---|

↓

| ERZEUGUNG SPRECHERADAPTIERTER LAUT KLASSENSPEZIFISCHER MERKMALSVERTEILUNGEN |
|---|

↓

| BAYES - KLASSIFIKATION |
|---|

↓ LAUT KLASSEN

FIG 2

$t(m)$

$t$

$P_A(m)$

$P_B(m)$

$m$

FIG 3

$m$

$m$

$t(m)$

$t$

$P_A(m|k=1)$

$P_A(m|k=2)$

$P_B(m|k=1)$

$m$

$P(m|k=2)$

$m$